# EUROPEAN PATENT SPECIFICATION

(11) **EP 4 300 030 B1**
(45) Date of publication and mention of the grant of the patent: **02.12.2026**
(21) Application number: 21927934.6
(22) Date of filing: 26.02.2021
(51) Int. Cl.: G01M 11/00, G01H 9/00, G01M 11/08, H04B 10/071

(54) **COHERENT LIGHT MEASURING DEVICE, AND OPTICAL LINE TEST SYSTEM AND METHOD**
VORRICHTUNG ZUR MESSUNG VON KOHÄRENTEM LICHT SOWIE SYSTEM UND VERFAHREN ZUM TESTEN OPTISCHER LEITUNGEN
DISPOSITIF DE MESURE DE LUMIÈRE COHÉRENTE, ET SYSTÈME ET PROCÉDÉ D'ESSAI DE LIGNE OPTIQUE

(43) Date of publication of application: 03.01.2024
(73) Proprietor: NTT, Inc., Tokyo 100-8116 (JP)
(72) Inventor: IIDA, Daisuke, Musashino-shi, Tokyo 180-8585 (JP); ENOMOTO, Yoshitaka, Musashino-shi, Tokyo 180-8585 (JP); KITO, Chihiro, Musashino-shi, Tokyo 180-8585 (JP); OKAMOTO, Tatsuya, Musashino-shi, Tokyo 180-8585 (JP); KOSHIKIYA, Yusuke, Musashino-shi, Tokyo 180-8585 (JP); WAKISAKA, Yoshifumi, Musashino-shi, Tokyo 180-8585 (JP); HONDA, Nazuki, Musashino-shi, Tokyo 180-8585 (JP)
(74) Representative: v. Bezold & Partner Patentanwälte - PartG mbB
(86) International application number: PCT/JP2021/007519
(87) International publication number: WO 2022/180834

(56) References cited:
- WO-A1-2017/139579
- WO-A1-2019/172276
- WO-A1-2020/059640
- WO-A9-2020/206199
- JP-A- 2017 026 503
- JP-A- 2019 078 637
- IIDA DAISUKE ET AL: "Advances in distributed vibration sensing for optical communication fiber state visualization", OPTICAL FIBER TECHNOLOGY, vol. 57, 1 July 2020 (2020-07-01), AMSTERDAM, NL, pages 102263, XP093036976, ISSN: 1068-5200, DOI: 10.1016/j.yofte.2020.102263
- MERLO SABINA ET AL: "Runways ground monitoring system by phase-sensitive optical-fiber OTDR", 2017 IEEE INTERNATIONAL WORKSHOP ON METROLOGY FOR AEROSPACE (METROAEROSPACE), IEEE, 21 June 2017 (2017-06-21), pages 523 - 529, XP033135234, DOI: 10.1109/METROAEROSPACE.2017.7999629

## Description

### Technical Field

The present disclosure relates to systems and methods for testing optical lines.

### Background Art

An optical fiber line test system detecting an abnormal point, at which loss or reflection occurs, using measurement of a backscattered light distribution of an optical fiber has been proposed (see, for example, Non Patent Literature 1), and a technology for identifying a facility position using an optical fiber vibration sensor has been proposed (see, for example, Patent Literature 1).

In using the facility position identifying principle of Patent Literature 1, when the vibration of a communication optical fiber is measured from building to which optical fibers converge using an optical fiber vibration sensing device and at the same time a manhole cover is struck, the striking vibration and the location thereof can be detected, and the existence of the communication optical fiber under the ground and comparing between the manhole position and the fiber route map can be confirmed without opening the manhole.

As a result of various needs and expansion of a use scale, a more flexible wired network configuration has been required, and therefore longer distance wiring and a large number of communication facilities have been used, and efficiency of maintenance and operation work thereof has been required. In addition, although the social importance of wireless communication such as 5G is increasing, the wiring of a base station therefor is a wired network. In most cases, a radio base station is open by overhead wiring. In the case of a base station installed on a rooftop of a building, reaching thereto is performed via wiring on the premises. Therefore, it is necessary to enhance the monitoring/fault isolation function of all communication wiring facilities including overhead wiring, overhead relay, and wiring on the premises.

Regarding a long-distance optical fiber line including an overhead line, the optical line test of Non Patent Literature 1 is not always measurable up to the far end. In this case, since the line test itself is a simple optical time domain reflectometer (OTDR) of direct detection, there is a problem that the SN is not large and the measurement distance is relatively short.

In addition, when a large loss or reflection occurs, the test light becomes very weak at a position farther away than this position. In this case, in the face of large loss or reflection occurring at two or more locations, there is a problem that only one point can be detected.

In addition, even though the distance to the abnormal position is known, there are many errors in the distance, and/or there is a problem that abnormalities such as disconnection cannot be found by visual inspection in the overhead facility and the underground facility due to existence of many manholes, utility poles, manhole closures, and the like in the vicinity of the site.

In this context, Non Patent Literature 3 discloses distributed vibration sensing (DVS) measurement technologies for visualizing the state of optical fiber in communication cables.

Non Patent Literature 4 discloses a measurement system that can be used jointly with a conventional Precision Runway Monitor (PRM) approach to monitor aircrafts position on land without using the radar approach or requiring visual inspection of the lanes. The system is made of ground-based distributed optical fiber sensors (OFSs), to be placed below the concrete floor of the take-off and landing lanes as well as along the different roads and intersections within the airport. OFSs will be read by a phase-sensitive OTDR (Φ-OTDR) driven by low-noise narrow-linewidth 1.55 mm laser. The laser field is used to inject the optical fiber with a pulsed signal and to read the phase shifts arising from vibrations and pressure waves produced by aircrafts moving, or even still with engines turned on, along the lanes. An absolute localization of different planes, with a few meters resolution and accuracy across the whole airport, is possible after installing OFSs and adjustment of the detection system.

Patent Literature 4 discloses aerial fiber optical cable localization using distributed acoustic sensing (DAS) that determines the locality of electrical transformers affixed to utility poles along with the aerial fiber optical cable as well as any length(s) of fiber optical cable between the poles.

Patent Literature 5 discloses a manhole position specification method, including: a first step for measuring a time variation in scattered light from an optical fiber from an end of the optical fiber when an impact blow is applied to the cover of a manhole on the path of the optical fiber, and thereby acquiring the time variation of the scattered-light intensity distribution in the longitudinal direction of the optical fiber; a second step for specifying the position of the impact blow on the optical fiber by determining the occurrence of vibration due to the impact blow on the basis of the time variation at each position in the scattered-light intensity distribution; and a third step for associating the position of the impact blow on the optical fiber and the map position of the manhole to which the impact blow was applied to the cover thereof, and thereby specifying the position of the manhole represented by the optical fiber length from the end.

### Citation List

### Patent Literature

Patent Literature 1: JP 2020-052030 A
Patent Literature 2: JP 2017-026503 A
Patent Literature 3: JP 2020-169904 A
Patent Literature 4: WO 2020/206199 A9
Patent Literature 5: WO 2020/059640 A1

### Non Patent Literature

Non Patent Literature 1: "2. Overview of Optical Test Module (OTM)," ANSL R&D Times, No. 33, 2003_06, https://www.ansl.ntt.co.jp/j/times/033/02/02.html
Non Patent Literature 2: "1. Immersion Detection Technology," ANSL R&D Times, No. 58, 2009_01, https://www.ansl.ntt.co.jp/j/times/058/01/01.html
Non Patent Literature 3: D. Iida et al., "Advances in distributed vibration sensing for optical communication fiber state visualization", Opt. Fiber Technol. 57 (2020) 102263,
Non Patent Literature 4: S. Merlo et al.," Runways ground monitoring system by phase-sensitive optical-fiber OTDR", 2017 IEEE International Workshop on Metrology for AeroSpace (MetroAeroSpace), IEEE 21 (2017) 523.

### Summary of Invention

### Technical Problem

An object of the present disclosure is to enable testing of a long-distance optical fiber line and detecting of distances to a plurality of abnormal facilities.

### Solution to Problem

In the present disclosure, a long-range loss distribution is measured by time-averaging single measurement results of an optical fiber line by an OTDR device that performs coherent detection, and a vibration distribution is measured by arranging the long-range loss distribution in time series.

The optical line test method according to claim 2 of the present disclosure includes
detecting a distribution of loss points of an optical line in a longitudinal direction, using a coherent light measurement device,
applying vibration to facility disposed on a path of the optical line,
detecting a vibration point of the optical line in a longitudinal direction upon applying the vibration, using the coherent light measurement device, and
identifying the loss point based on correspondence between the detected loss point and the vibration point.

A coherent detection device of the present disclosure is a coherent OTDR for performing coherent detection according to claim 1.

### Advantageous Effects of Invention

According to the present disclosure, it is practicable to test a long-distance optical fiber line and detect distances to a plurality of abnormal facilities.

### Brief Description of Drawings

Fig. 1 illustrates a configuration example of a coherent OTDR.
Fig. 2 illustrates an example of a backscattered light waveform.
Fig. 3 illustrates an example of an optical line test method of the present embodiment.
Fig. 4 illustrates an example of an optical line loss measurement result.
Fig. 5 illustrates an example of a striking position.
Fig. 6 illustrates a detection example of vibration obtained by striking a manhole.
Fig. 7 illustrates an example of display in the coherent light measurement device.

### Description of Embodiments

The following is a detailed description of embodiments of the present disclosure, with reference to the drawings. The present disclosure is not limited to the embodiments described below. These embodiments are merely an example, and the present disclosure can be carried out in forms with various modifications and improvements based on knowledge of those skilled in the art. Note that components equivalent to each other are denoted by a common reference numeral in this specification and the drawings.

### (Embodiment 1)

The optical line test system of the present disclosure includes a coherent light measurement device capable of coherent detection at any point of the optical line in the longitudinal direction. In the present embodiment, as an example of the measurement technique, an example, using a coherent OTDR that performs coherent detection, will be described.

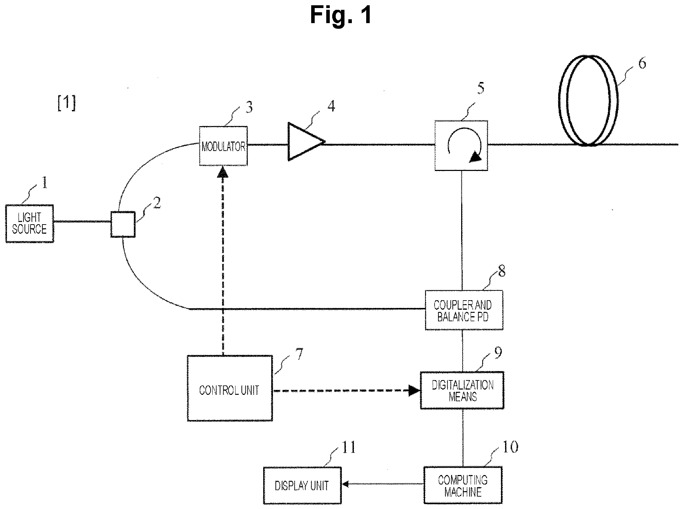

Fig. 1 illustrates a configuration example of a coherent OTDR. Reference numeral 1 is a light source that emits coherent light. The light from the light source 1 is branched by an optical coupler 2, one of the branched portions is modulated by a modulator 3 to generate a frequency-modulated light pulse, and the light pulse is amplified by an amplifier 4. The amplified light pulse enters an optical fiber 6 through a circulator 5. The optical fiber 6 is an optical line to be tested, and is also referred to as an optical fiber under test (FUT).

Scattered light and reflected light from the optical fiber 6 return to the circulator 5, are multiplexed with the other of the branched portions by the optical coupler 2, and are coherently detected by a balance PD 8. The signal coherently detected is converted into digital data by digitalization means 9 and subjected to numerical calculation processing by a computing machine 10. A control unit 7 controls the modulator 3 and the measurement timing. The control unit 7, the digitalization means 9, the computing machine 10, and a display unit 11 can also be implemented by a computer and a program, and the program can be recorded in a recording medium or provided through a network.

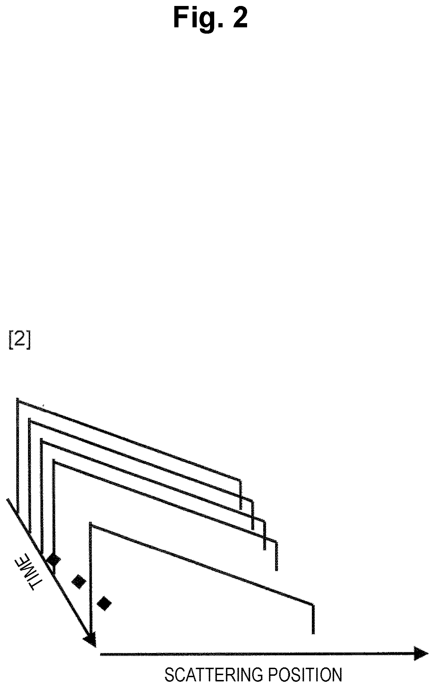

By the OTDR that performs coherent detection, the backscattered light waveform as illustrated in Fig. 2 can be acquired so as to be restricted to that of the incident light pulse. Here, it is also possible to increase the number of samples of the backscattered light waveform by frequency multiplexing the frequency of the light pulse by the modulator 3. In addition, the coherent detection in the balance PD 8 is heterodyne detection because the frequency modulation is performed by the modulator 3. Here, if the modulator 3 does not perform frequency modulation, homodyne detection is performed. The coherent detection here may be homodyne detection in which such frequency modulation in the modulator 3 is not performed.

The backscattered light waveform is a time waveform, and an average of a plurality of backscattered light waveforms, obtained by a plurality of light pulses, is a waveform obtained by a so-called coherent OTDR, and enables measurement at a high SN ratio.

In addition, by arranging the backscattered light waveforms in the respective light pulses in accordance with time-series pulse numbers before averaging, it is practicable to measure the change over time of the scattered light at each scattering position, that is, the vibration. In the frequency multiplexing, the techniques of Patent Literature 2 and Patent Literature 3 can be used. For example, a frequency multiple averaging method in consideration of phase rotation described in Patent Literature 3 may be adopted.

In the OTDR configuration in which the coherent detection is performed as described above, it is practicable to measure the long-range loss distribution on average and to measure the vibration distribution in accordance with time series, with respect to a single measurement result. In the present disclosure, it is practicable to detect the distance to the abnormal facility by applying vibration to the facility laid on the optical fiber 6 and detecting the vibration. Here, in the present disclosure, the struck facility is any facility laid on the optical fiber 6, and for example, at least one of a closure, a utility pole, or a manhole can be exemplified.

### (Embodiment 2)

In the present embodiment, an optical line test method executed by the optical line test system will be described. In the present embodiment, an example of bending loss due to water immersion in using the water immersion detection module will be described as an example of comparing with the facilities in the site.

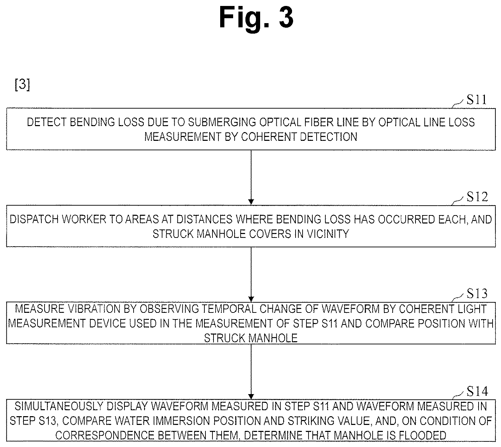

Fig. 3 illustrates an example of an optical line test method of the present embodiment. The optical line test method according to the present embodiment includes steps S11 to S14.

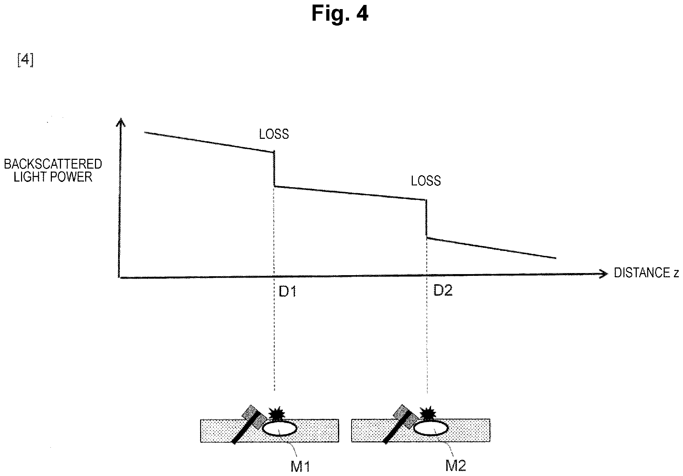

Step S11: A bending loss due to submerging the optical fiber 6 is detected by optical line loss measurement by coherent detection. Fig. 4 illustrates an example of an optical line loss measurement result. In the optical line loss measurement result, the distribution of the loss points of the optical fiber 6 in the longitudinal direction is displayed on the display unit 11. For example, when the bending loss occurs at distances D1 and D2 from the coherent light measurement device, the backscattered light power decreases at the distances D1 and D2. Here, in the present disclosure, since the coherent detection is used, the measurement distance range can be expanded, and the loss at a plurality of points can be measured.

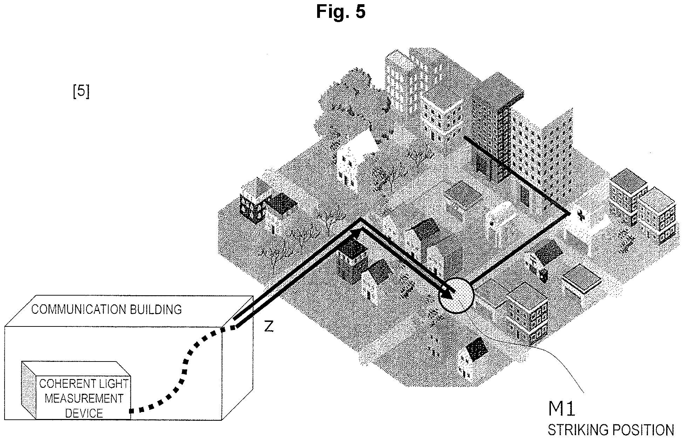

Step S12: A worker is dispatched to areas at the distances D1 and D2 where the bending loss has occurred each, and manhole covers M1 and M2 in the vicinity are struck. For example, as illustrated in Fig. 5, the manhole M1, arranged in an area at the distance D1 from the coherent light measurement device, is struck.

Step S13: The coherent light measurement device, used in the measurement of step S11, measures the vibration of the optical fiber 6 by observing the temporal change of the waveform, and identifies the position of the struck manhole. For example, the vibration at the distance D1 is detected by measuring the temporal change of the backscattered light waveform at the distance D1, using the backscattered light waveform before averaging.

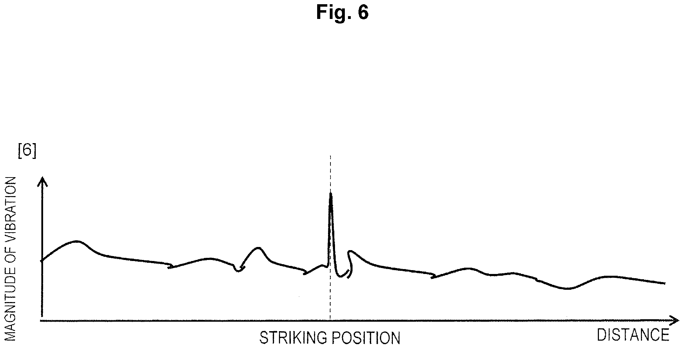

Fig. 6 illustrates a detection example of vibration obtained by striking a manhole. When the optical fiber 6 is laid under the manhole, vibration is detected at the position of the manhole. In the present embodiment, since the coherent light measurement device, arranged at the same position as that of step S11, detects vibration, the position of the manhole corresponds with the distance in the longitudinal direction of the optical fiber 6 from the coherent light measurement device to the manhole in step S11. As a result, it is practicable to detect a vibration point of the optical fiber 6 in the longitudinal direction.

Step S14: The waveform measured in step S11 and the waveform measured in step S13 are simultaneously displayed on the display unit 11, the loss point and the vibration point are compared, and, on condition of correspondence between the points, it is determined that the manhole is flooded. For example, when the vibration point detected in the step S13 corresponds with the distance D1 in which the loss has occurred, it is determined that the struck manhole M1 is a flooded manhole in which a bending loss has occurred, and the determination result is displayed on the display unit 11.

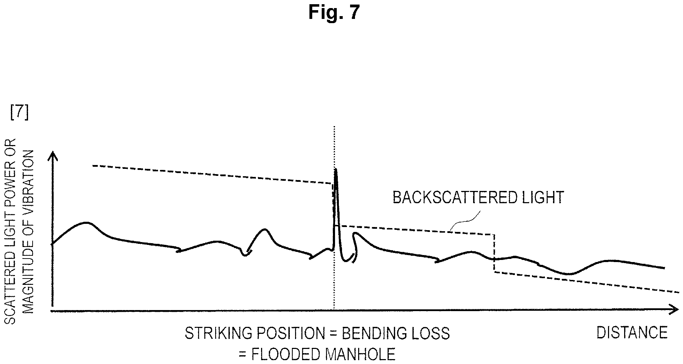

Fig. 7 illustrates an example of display in the coherent light measurement device. Since the coherent light measurement device measured in step S11 is used, measurement can be performed in the same measurement distance range. Therefore, as illustrated in Fig. 7, the magnitude of the vibration and the backscattered light power are displayed in the same measurement distance range on the display unit 11. At this time, the time when the worker strikes may be recorded by the worker and displayed on the display unit 11. As a result, the backscattered light waveform and the vibration detection time are compared, so that the determination can be made more accurately.

As described above, the system and method of the present disclosure can achieve both range expansion by coherent measurement and loss measurement and vibration measurement with the same device.

In the present embodiment, step S13 is executed after step S11, but these may be simultaneous measurement.

In addition, in step S13, the computing machine 10 may automatically detect a waveform change, due to vibration, in digital data, and in step S14, the computing machine 10 may automatically compare the vibration point and the loss point. In addition, the detection result of the vibration and the display of the backscattered light waveform may be superimposed as illustrated in Fig. 7, or may be arranged side by side. In addition, the output result may be a waveform as illustrated in Fig. 7 or only correspondence or incongruity with each striking position.

In addition, the coherent light measurement device has a communication function, and it is also possible to transmit information to a site worker who has been struck and check the information on the site with a certain terminal such as a smartphone or a tablet. The information is, for example, a detection result of a loss point, a detection result of a vibration point, or a result of comparison between the loss point and the vibration point. Further, the coherent light measurement device operates in accordance with an instruction from the terminal of the site worker. As a result, the operator who performs the striking in step S12 can remotely perform the operations in steps S11, S13, and S14, so that all the operations can be performed at the same time on site.

### (Embodiment 3)

In the present embodiment, detection of a connection loss, a breaking loss, and abnormal reflection at a connection part of the optical fiber 6 will be described.

Steps S11 and S13 are the same as those in Embodiment 2.

In step S12, a utility pole or a manhole is struck.

In step S14, the loss point detected in step S11 and the vibration point detected in step S13 are compared with each other to identify loss facility (a utility pole or a manhole having a closure with an abnormal connection).

### (Embodiment 4)

When the facility of Embodiment 2 is a closure in an underground manhole, there may be multiple closures under the manhole. In this case, each closure is struck in step S12. As a result, the vibration is detected for each closure in step S13, and the closure in which the vibration is detected and the optical fiber in which the loss is detected in step S14 are compared with each other. This allows a lossy closure to be identified.

### (Outline and Points of Present Technology)

- The optical line test system of the present disclosure makes the measurement technique coherent, expands a measurable dynamic range, and enables a long measurement distance and low power scattered light reception withstandable against a plurality of abnormalities.
- On the basis of dynamic distortion (vibration) sensing using coherent detection, the vibration point of the optical line, by means of externally striking on facility arranged on the path of the optical line, is detected, and a distance to an abnormal point on the optical test and the facility at the struck site are compared. The sensitivity is improved by the vibration sensing for measuring the phase by the coherent detection, and the vibration is detectable even though there are a plurality of losses and reflections.
- The above two measurements can be realized by the same hardware, and can be performed simultaneously by performing one measurement and two processes based on the result thereof.
- By performing the above two measurements with one device and displaying them on the same screen, it is practicable to simultaneously identify a plurality of abnormal positions and identify work facility on site.
- The checkable information may be a waveform itself or a comparing result.
- It is also possible to adopt a structure capable of controlling the coherent light measurement device from the struck site. For example, the coherent light measurement device detects a distribution of loss points of the optical fiber 6 in the longitudinal direction and detects a vibration point of the optical fiber 6 in the longitudinal direction in accordance with the instruction from the set terminal.

### (Effects)

- The measurement dynamic range is extended. Therefore, a long-distance optical fiber line test can be performed. In addition, distances to a plurality of abnormal facilities can be detected.
- It is practicable to detect a plurality of failure positions of any failure case such as breakage, bending, reflection, or bending due to water immersion.
- It is practicable to detect a strike on anything such as a manhole, a utility pole, or a closure in the manhole and to simplify on-site breakdown facility comparison.
- When a wall or the like is struck, it is practicable to compare with an internal wiring such as a customer's house.
- The above measurement can be performed by one measuring instrument and can be determined by a single output.
- Owing to the above effect, it is practicable to greatly reduce the operation such as detection and repair of abnormal facility of the optical fiber line.
- The comparing result is transmitted to a set terminal such as a smart phone or a tablet and displayed thereon, so that it can be confirmed even at the site where the impact is made.

### Industrial Applicability

The present disclosure can be applied to the information communication industry.

### Reference Signs List

- 1: Light source
- 2: Optical coupler
- 3: Modulator
- 4: Amplifier
- 5: Circulator
- 6: Optical fiber
- 7: Control unit
- 8: Balance PD
- 9: Digitalization means
- 10: Computing machine
- 11: Display unit

## Claims

1. A coherent light measurement device that is a coherent OTDR for performing coherent detection,
the coherent OTDR comprises:
a light source (1) that emits coherent light,
an optical coupler (2), wherein the light from the light source (1) is branched by the optical coupler (2),
a modulator (3), wherein one of the branched portions is modulated by the modulator (3) to generate a frequency-modulated light pulse,
an amplifier (4), wherein the light pulse is amplified by the amplifier (4),
a circulator (5), wherein the amplified light pulse enters an optical fiber (6) through the circulator (5), and wherein scattered light and reflected light from the optical fiber (6) return to the circulator (5), are multiplexed with the other of the branched portions by the optical coupler (2), and are coherently detected by a balance PD (8),
digitalization means (9), wherein the signal coherently detected is converted into digital data by the digitalization means (9),
a computing machine (10), wherein the digital data is subjected to numerical calculation processing by the computing machine (10), and
a communication function being configured to transmit information to a terminal, preferably a smartphone or a tablet, the coherent light measurement device is operated in accordance with an instruction from the terminal,
the device is configured for
measuring a distribution of loss points by time-averaging a plurality of backscattered light waveforms obtained by a plurality of light pulses,
measuring a vibration point by arranging the plurality of backscattered light waveforms obtained by the plurality of light pulses in accordance with time series, and
determining whether the loss point and the vibration point correspond or do not correspond.

2. An optical line test method comprising:
detecting a distribution of loss points of an optical line in a longitudinal direction, using a coherent light measurement device;
applying vibration to facility disposed on a path of the optical line;
detecting a vibration point of the optical line in a longitudinal direction upon applying the vibration, using the coherent light measurement device; and
identifying the loss point based on correspondence between the detected loss point and the vibration point.

## Patentansprüche

1. Vorrichtung zur Messung von kohärentem Licht, die ein kohärentes OTDR zum Durchführen einer kohärenten Detektion ist,
das kohärente OTDR umfasst:
eine Lichtquelle (1), die kohärentes Licht emittiert,
einen optischen Koppler (2), wobei das Licht von der Lichtquelle (1) durch den optischen Koppler (2) verzweigt wird,
einen Modulator (3), wobei einer der verzweigten Anteile durch den Modulator (3) moduliert wird, um einen frequenzmodulierten Lichtimpuls zu erzeugen,
einen Verstärker (4), wobei der Lichtimpuls durch den Verstärker (4) verstärkt wird,
einen Zirkulator (5), wobei der verstärkte Lichtimpuls über den Zirkulator (5) in eine optische Faser (6) eintritt und wobei Streulicht und reflektiertes Licht von der optischen Faser (6) zu dem Zirkulator (5) zurückkehren, durch den optischen Koppler (2) mit dem anderen der verzweigten Anteile gemultiplext werden und durch eine Balance-PD (8) kohärent detektiert werden,
ein Digitalisierungsmittel (9), wobei das kohärent detektierte Signal durch das Digitalisierungsmittel (9) in digitale Daten umgewandelt wird,
eine Rechenmaschine (10), wobei die digitalen Daten durch die Rechenmaschine (10) einer numerischen Berechnungsverarbeitung unterzogen werden, und
eine Kommunikationsfunktion, die dazu konfiguriert ist, Informationen an ein Endgerät, vorzugsweise ein Smartphone oder ein Tablet, zu übertragen, wobei die Vorrichtung zur Messung von kohärentem Licht gemäß einer Anweisung von dem Endgerät betrieben wird,
die Vorrichtung ist konfiguriert zum
Messen einer Verteilung von Verlustpunkten durch zeitliches Mitteln einer Vielzahl von Rückstreulicht-Wellenformen, die durch eine Vielzahl von Lichtimpulsen erhalten werden,
Messen eines Vibrationspunkts durch Anordnen der Vielzahl von Rückstreulicht-Wellenformen, die durch die Vielzahl von Lichtimpulsen erhalten werden, gemäß einer Zeitreihe und
Bestimmen, ob der Verlustpunkt und der Vibrationspunkt übereinstimmen oder nicht übereinstimmen.

2. Verfahren zum Testen einer optischen Leitung, umfassend:
Detektieren einer Verteilung von Verlustpunkten einer optischen Leitung in einer Längsrichtung unter Verwendung einer Vorrichtung zur Messung von kohärentem Licht;
Aufbringen von Vibration auf eine Einrichtung, die auf einem Pfad der optischen Leitung angeordnet ist;
Detektieren eines Vibrationspunkts der optischen Leitung in einer Längsrichtung beim Aufbringen der Vibration unter Verwendung der Vorrichtung zur Messung von kohärentem Licht; und
Identifizieren des Verlustpunkts auf der Grundlage einer Übereinstimmung zwischen dem detektierten Verlustpunkt und dem Vibrationspunkt.

## Revendications

1. Dispositif de mesure de lumière cohérente qui est un OTDR cohérent destiné à effectuer une détection cohérente,
l'OTDR cohérent comprend :
une source de lumière (1) qui émet de la lumière cohérente,
un coupleur optique (2), dans lequel la lumière provenant de la source de lumière (1) est dérivée par le coupleur optique (2),
un modulateur (3), dans lequel l'une des parties dérivées est modulée par le modulateur (3) pour générer une impulsion lumineuse modulée en fréquence,
un amplificateur (4), dans lequel l'impulsion lumineuse est amplifiée par l'amplificateur (4),
un circulateur (5), dans lequel l'impulsion lumineuse amplifiée entre dans une fibre optique (6) par l'intermédiaire du circulateur (5), et dans lequel de la lumière diffusée et de la lumière réfléchie provenant de la fibre optique (6) reviennent au circulateur (5), sont multiplexées avec l'autre des parties dérivées par le coupleur optique (2), et sont détectées de manière cohérente par une PD équilibrée (8),
un moyen de numérisation (9), dans lequel le signal détecté de manière cohérente est converti en données numériques par le moyen de numérisation (9),
une machine de calcul (10), dans laquelle les données numériques sont soumises à un traitement de calcul numérique par la machine de calcul (10), et une fonction de communication configurée pour transmettre des informations à un terminal, de préférence un smartphone ou une tablette, le dispositif de mesure de lumière cohérente étant actionné conformément à une instruction provenant du terminal,
le dispositif est configuré pour
mesurer une distribution de points de perte par moyennage temporel d'une pluralité de formes d'onde de lumière rétrodiffusée obtenues par une pluralité d'impulsions lumineuses,
mesurer un point de vibration en agençant la pluralité de formes d'onde de lumière rétrodiffusée obtenues par la pluralité d'impulsions lumineuses conformément à une série temporelle, et
déterminer si le point de perte et le point de vibration correspondent ou ne correspondent pas.

2. Procédé d'essai de ligne optique comprenant :
la détection d'une distribution de points de perte d'une ligne optique dans une direction longitudinale, en utilisant un dispositif de mesure de lumière cohérente ;
l'application de vibration à une installation disposée sur un trajet de la ligne optique ;
la détection d'un point de vibration de la ligne optique dans une direction longitudinale lors de l'application de la vibration, en utilisant le dispositif de mesure de lumière cohérente ; et
l'identification du point de perte sur la base d'une correspondance entre le point de perte détecté et le point de vibration.
